**Europäisches Patentamt**

(19) **European Patent Office**

**Office européen des brevets**

(11) Veröffentlichungsnummer: **0 107 243**
**B1**

(12) **EUROPÄISCHE PATENTSCHRIFT**

(45) Veröffentlichungstag der Patentschrift:
**07.01.87**

(51) Int. Cl.⁴: **C 03 B 5/235,** F 28 D 17/02, F 27 B 9/30, F 28 F 7/02

(21) Anmeldenummer: **83201463.3**

(22) Anmeldetag: **13.10.83**

(54) **Liegender Gitterbesatz für Kammern regenerativ beheizter Öfen.**

(30) Priorität: **25.10.82 AT 3919/82**

(43) Veröffentlichungstag der Anmeldung:
**02.05.84 Patentblatt 84/18**

(45) Bekanntmachung des Hinweises auf die Patenterteilung:
**07.01.87 Patentblatt 87/2**

(84) Benannte Vertragsstaaten:
**BE DE FR GB IT**

(56) Entgegenhaltungen:
**US - A - 2 839 286**
**US - A - 4 346 753**

(73) Patentinhaber: **Veitscher Magnesitwerke-Actien-Gesellschaft, Schubertring 10-12, A-1010 Wien (AT)**

(72) Erfinder: **Horak, Josef, Dipl.-Ing., Otto Weininger-Gasse 6, A-1130 Wien (AT)**
Erfinder: **Kassegger, Friedrich, Dipl.-Ing., Wasshubergasse 7, A-2700 Wiener Neustadt (AT)**

(74) Vertreter: **Kliment, Peter, Dipl.-Ing. Mag.-jur. et al, Singerstrasse 8, A-1010 Wien (AT)**

## Beschreibung

Die Erfindung betrifft einen liegenden Gitterbesatz für Kammern regenerativ beheizter Öfen, insbesondere Glasschmelzöfen, aus neben- und übereinandergelegten, feuerfesten, prismatischen Hohlsteinen in horizontaler Anordnung ihrer Längsachsen.

Regenerativ beheizte Öfen besitzen einen zur Aufnahme des Schmelzgutes oder Ofeneinsatzes dienenden, meist wannenförmigen Ofenteil, der wechselweise von zwei gegenüberliegenden Seiten beheizbar ist. Im Anschluss an die beiden Brennerkanäle ist je eine Regeneratorkammer mit wärmespeicherndem, feuerfestem Besatz angeordnet. In einem Betriebstakt strömt die Frischluft durch die dem gerade in Betrieb befindlichen Brenner vorgeschaltete, zuvor aufgeheizte Kammer und erwärmt sich dabei; die Abgase dieses Brenners strömen durch die gegenüberliegende andere Kammer und heizen deren Besatz auf. Im nächsten Takt ist der dieser zweiten Kammer zugeordnete Brenner in Betrieb, wobei nun Frischluft und Abgas in umgekehrter Richtung durch den Ofen strömen und die erstgenannte Kammer aufgeheizt wird.

Der Gitterbesatz der Kammern weist Kanäle für den Gasdurchgang auf. Längs der Wandungen dieser Kanäle findet der Wärmeübergang von den Gittersteinen zur Frischluft bzw. vom Abgas zu den Gittersteinen statt.

Bei vielen Regenerativöfen sind die Gittersteine in den Kammern «stehend» angeordnet, d.h. derart, dass der Gasdurchgang durch die Kanäle in vertikaler Richtung erfolgt. Zum Aufbau eines solchen stehenden Gitterbesatzes mit vertikalen Kanälen haben sich prismatische feuerfeste Hohlsteine mit achteckigem Aussenquerschnitt und quadratischem, gegebenenfalls abgerundete oder abgeschrägte Ecken aufweisendem Innenquerschnitt, z.B. nach der AT-B-365 545, bewährt, da es aufgrund ihrer Formgebung möglich ist, aus ihnen einen stabilen Gitterbesatz aufzubauen und dabei die Wandstärke der Steine so weit zu verringern, dass praktisch das ganze Steinvolumen zur Wärmespeicherung dienen kann. Zu diesem Zweck wurde ein hydraulischer Durchmesser des Kanals von 120 bis 200 mm vorgesehen und die Wandstärke derart bemessen, dass die Beziehung: hydraulischer Durchmesser geteilt durch die in Richtung der parallel zur Grund- und/oder Deckfläche verlaufenden Hauptachsen gemessene Wandstärke des Steines einen zwischen 3 bis 5 liegenden Wert ergibt. Beispielsweise beträgt die Wandstärke 40 mm, wogegen die früher verwendeten Rechtecksteine zur Erzielung eines stabilen Gitteraufbaus eine Dicke von 60 mm und mehr aufweisen mussten, wobei das Steininnere durch die Abgase nicht erwärmt werden konnte und daher nichts zur Wärmespeicherung beitrug.

Es gibt aber auch Regenerativöfen, insbesondere Glasschmelzöfen, bei denen der Gitterbesatz «liegend», d.h. mit horizontal verlaufenden Gasdurchgangskanälen, angeordnet ist. Ein solcher liegender Gitterbesatz ist aus der US-A-4 346 753 bekannt. Der Gitterstein für diesen Besatz weist einen zentralen Kanal und sechs periphere Kanäle mit jeweils sechseckigem Querschnitt auf. Die äusseren Wände dieses Steines sind halb so dick wie die inneren Wände zwischen den Kanälen eines Steines, so dass beim Zusammenbau derartiger Steine ein Gitterbesatz mit hexagonaler Struktur und überall gleicher Wandstärke zwischen den Kanälen entsteht.

Die nach der vorhin genannten AT-B-365 545 für stehende Gitterungen vorgesehenen achteckig prismatischen Hohlsteine können für liegende Gitterungen nicht verwendet werden, da das Gitterwerk aufgrund der schrägen Auflageflächen bei liegender Setzweise einen horizontalen Schub bekäme, der durch starke Anker abgefangen werden müsste, wobei aber auch dann noch immer die Gefahr des Zertreibens der Besatzsteine gegeben wäre.

Aus der US-A-2 839 286 ist ein Gitterbesatz mit im wesentlichen vertikalem Gasdurchgang bekannt, bestehend aus quadratisch oder rechteckig prismatischen Steinen, die im Abstand voneinander aufgeschlichtet sind und so vertikale Gaszüge bilden. Zumindest einige der Gittersteine sind hohl, d.h. mit horizontalen Kanälen ausgebildet, die sich gegen die vertikalen Gaszüge öffnen, wodurch zusätzlich horizontale Gasdurchgänge im Gitterbesatz entstehen.

Aufgabe der Erfindung ist es, ein Besatzsystem für liegende Gitterungen zu schaffen, das einen stabilen Aufbau trotz Einhaltung einer geringen Kanalwandstärke, zwecks optimaler Ausnützung des Wärmespeichervermögens, ermöglicht, wobei die Kanalweiten den jeweiligen Erfordernissen angepasst werden können.

Nach der Erfindung wird diese Aufgabe bei einem liegenden Gitterbesatz der eingangs genannten Art dadurch gelöst, dass die Wandstärke der Hohlsteine der vollen Stärke der Heizwände der Kammern entspricht und dass die Hohlsteine im wesentlichen rechteckigen, vorzugsweise quadratischen Innen- und Aussenquerschnitt und an den äusseren Längskanten Abtreppungen aufweisen, die bei benachbarten Hohlsteinen ineinandergreifen, wobei die Innenflächen der Hohlsteine eine erste Art von Kanälen für den Gasdurchgang begrenzen, die Aussenflächen von je vier kreuzweise nebeneinanderliegenden Hohlsteinen eine zweite Art von Kanälen für den Gasdurchgang begrenzen und die beiden Arten von Kanälen schachbrettartig angeordnet sind.

Die zwei Arten von Kanälen weisen verschiedene Querschnittsform auf. Beispielsweise ergeben bei Hohlsteinen mit quadratischem Innen-, d.h. Kanalquerschnitt einer Seitenlänge von etwa 100 bis 160 mm und mit einer Wandstärke von etwa 40 mm die Aussenflächen von vier kreuzweise nebeneinanderliegenden Hohlsteinen eine zweite Art von Kanälen rechteckigen Querschnitts mit Seitenlängen von etwa 100 bis 160 mm und 140 bis 200 mm.

Die Hohlsteine des erfindungsgemässen Besatzes können abgerundete oder abgeschrägte Innenkanten aufweisen, wodurch die Stabilität des einzelnen Hohlsteines erhöht und seine einwandfreie Herstellung erleichtert werden kann.

Diese Abrundungen oder Abschrägungen der Innenkanten der Hohlsteine können auch dazu verwendet werden, in dem durch die Kanäle strömenden Gas Turbulenzen hervorzurufen, wodurch der Wärmeübergang zwischen Gas und Stein oder umgekehrt begünstigt wird. Beispielsweise können die in Richtung der Gasströmung hintereinanderliegenden Hohlsteine abwechselnd mit und ohne solche Abrundungen oder Abschrägungen der Innenkanten ausgeführt sein.

Zum gleichen Zweck können die in Richtung der Gasströmung hintereinanderliegenden Schichten von Hohlsteinen gegeneinander versetzt sein, so dass jeweils ein Kanal der ersten Art, z.B. ein quadratischer Kanalteil, in einer Schicht an einen Kanal der zweiten Art, z.B. an einen rechteckigen Kanalteil, in der Nachbarschicht anschliesst, wodurch in den Kanalwandungen Stufen entstehen, die zu Gasturbulenzen führen.

Weiter können zur Turbulenzbildung auch die bereits vorgeschlagenen Massnahmen, wie pyramidenstumpfförmige Ausbildung der Innenflächen der Hohlsteine, wodurch an ihren beiden Stirnseiten Unterschiede der Wandstärke, z.B. von 5 bis 15 mm bei einer Steinlänge von rund 150 mm auftreten, oder Anordnung von Ausnehmungen oder Durchbrechungen in den Wänden der Hohlsteine angewendet werden.

Für den erfindungsgemässen Gitterbesatz können alle für Gittersteine in Betracht kommenden feuerfesten Materialien angewendet werden. Besonders eignen sich Magnesia, Chromerz, Magnesiumaluminiumspinell, Tonerde und Mischungen dieser Stoffe sowie Forsterit oder Chamotte. Auch Sinter- oder Schmelzkornmaterialien aus den genannten Mischungen, z.B. aus Magnesiachromerz, können gewünschtenfalls verwendet werden.

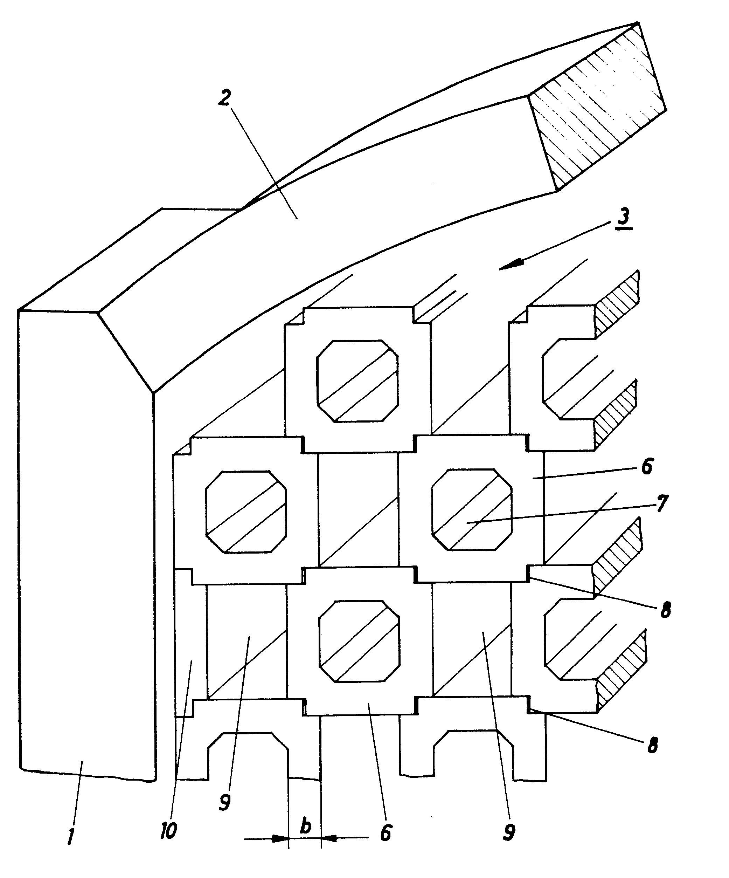

Die Zeichnung zeigt in schaubildlicher Darstellung die Teilansicht einer Regeneratorkammer mit einem Beispiel eines erfindungsgemässen Gitterbesatzes.

In einer Regeneratorkammer, deren Wand 1 und deren Decke 2 zum Teil angedeutet sind, ist ein liegender Gitterbesatz 3 angeordnet, der aus neben- und übereinandergelegten, prismatischen Hohlsteinen 6 besteht. Die Hohlsteine weisen einen achteckigen Innenquerschnitt auf, der durch Abschrägung der Ecken eines Quadrates entstanden ist. Dieser Innenquerschnitt definiert Kanäle 7 für den Gasdurchgang. Der Aussenquerschnitt der Hohlsteine 6 ist im wesentlichen quadratisch, doch weisen die Hohlsteine 6 an den Aussenkanten Abtreppungen 8 auf, die bei benachbarten Hohlsteinen 6 ineinandergreifen. Dadurch ergeben die Aussenflächen von je vier kreuzweise nebeneinanderliegenden Hohlsteinen 6 eine zweite Art von Kanälen 9 für den Gasdurchgang, die einen rechteckigen Querschnitt aufweisen. Die zwei Arten von Kanälen 7 und 9 sind schachbrettartig angeordnet. Im Randbereich des Gitterbesatzes 3 sind in jeder zweiten Steinreihe Randsteine 10 angeordnet, die einer Seitenwand eines Hohlsteines 6 entsprechen. Die Wandstärke b der Hohlsteine 6 bzw. der Randsteine 10 definiert die Stärke der Heizwände zwischen den Kanälen 7 und 9.

## Patentansprüche

1. Liegender Gitterbesatz für Kammern regenerativ beheizter Öfen, insbesondere Glasschmelzöfen, aus neben- und übereinandergelegten, feuerfesten, prismatischen Hohlsteinen in horizontaler Anordnung ihrer Längsachsen, dadurch gekennzeichnet, dass die Wandstärke (b) der Hohlsteine (6) der vollen Stärke der Heizwände der Kammern entspricht und dass die Hohlsteine (6) im wesentlichen rechteckigen, vorzugsweise quadratischen Innen- und Aussenquerschnitt und an den äusseren Längskanten Abtreppungen (8) aufweisen, die bei benachbarten Hohlsteinen (6) ineinandergreifen, wobei die Innenflächen der Hohlsteine (6) eine erste Art von Kanälen (7) für den Gasdurchgang begrenzen, die Aussenflächen von je vier kreuzweise nebeneinanderliegenden Hohlsteinen (6) eine zweite Art von Kanälen (9) für den Gasdurchgang begrenzen und die beiden Arten von Kanälen (7 und 9) schachbrettartig angeordnet sind.

2. Gitterbesatz nach Anspruch 1, dadurch gekennzeichnet, dass er in seinen Randbereichen in jeder zweiten Steinreihe Randsteine (10) enthält, die einer Seitenwand eines Hohlsteines (6) entsprechen.

3. Gitterbesatz nach Anspruch 1 oder 2, dadurch gekennzeichnet, dass die inneren Längskanten der Hohlsteine (6) abgerundet oder abgeschrägt sind.

4. Gitterbesatz nach einem der Ansprüche 1 bis 3, dadurch gekennzeichnet, dass die Innenflächen der Hohlsteine (6) pyramidenstumpfförmig ausgebildet sind, so dass die Hohlsteine (6) an ihren beiden Stirnseiten unterschiedliche Wandstärken besitzen.

5. Gitterbesatz nach Anspruch 4, dadurch gekennzeichnet, dass der Unterschied der Wandstärke der Hohlsteine (6) an ihren beiden Stirnseiten 5 bis 15 mm beträgt, bei einer Steinlänge von rund 150 mm.

6. Gitterbesatz nach einem der Ansprüche 1 bis 5, dadurch gekennzeichnet, dass die Wände der Hohlsteine (6) Ausnehmungen oder Durchbrechungen aufweisen.

7. Gitterbesatz nach einem der Ansprüche 1 bis 6, dadurch gekennzeichnet, dass die in Richtung der Gasströmung hintereinanderliegenden Schichten von Hohlsteinen (6) gegeneinander versetzt sind, so dass jeweils ein Kanal (7) der ersten Art in einer Schicht an einen Kanal (9) der zweiten Art in der Nachbarschicht anschliesst.

## Claims

1. Horizontal checkerwork for chambers of a regeneratively heated furnace, particularly a glass melting furnace, comprising prismatic refractory hollow bricks arranged in adjacent horizontal and vertical rows, their longitudinal axis extending in horizontal direction, characterized in that the wall thickness (b) of each hollow brick (6) is equivalent to the entire thickness of the heated walls in the chambers and that each hollow brick (6) has substantially rectangular, preferably square inner and outer cross sections and a stepped recess (8) in each of its longitudinal outer edges, adjacent recesses in adjacent bricks (6) engaging in each other, the inner surfaces of the hollow bricks (6) defining a first type of gas flow channels (7), the outer surfaces of each group of four crosswise adjoining hollow bricks (6) defining a second type of gas flow channels (9), both types of channels (7 and 9) forming a checkerboard pattern.

2. Checkerwork according to claim 1, characterized in that it comprises in its edge parts edge bricks (10) in every other horizontal brick row, each edge brick having the shape of one wall of the hollow brick (6).

3. Checkerwork according to claim 1 or 2, characterized in that the longitudinal inner edges of the hollow bricks (6) are rounded or bevelled.

4. Checkerwork according to one of the claims 1 to 3, characterized in that the inner surfaces of the hollow brick (6) form the frustrum of a pyramid so that the hollow brick (6) has different wall thicknesses at its opposite face ends.

5. Checkerwork according to claim 4, characterized in that the difference in the wall thickness of the hollow brick (6) at opposite face ends is 5 to 15 mm, the brick having a length of about 150 mm.

6. Checkerwork according to one of the claims 1 to 5, characterized in that the walls of the hollow bricks (6) have recesses or openings.

7. Checkerwork according to one of the claims 1 to 6, characterized in that the layers of hollow bricks (6) arranged one behind the other in the direction of the gas flow are staggered against each other so that each channel of the first type in one layer is continued by a channel of the second type in the adjacent layer.

**Revendications**

1. Empilage horizontal pour chambres d'un four à régénération, en particulier un four pour la fusion du verre, constitué par des briques creuses réfractaires, en forme de prisme, juxtaposées et superposées, leur axe longitudinal étant orienté horizontalement, empilage caractérisé en ce que l'épaisseur de paroi (b) des briques creuses (6) correspond à l'épaisseur totale des parois de chauffe des chambres et que les briques creuses (6) présentent des sections intérieures et extérieures essentiellement rectangulaires, de préférence carrées et, sur les arêtes longitudinales extérieures, des gradins (8) qui s'emboîtent dans le cas de briques creuses (6) voisines, les faces intérieures des briques creuses (6) délimitant un premier type de canaux (7) pour le passage des gaz, les faces extérieures de chaque fois quatre briques creuses (6) disposées les unes à côté des autres en forme de croix délimitant un deuxième type de canaux (9) pour le passage des gaz et les deux types de canaux (7) et (9) étant disposés en damiers.

2. Empilage selon la revendication 1, caractérisé en ce que, dans sa zone de bordure, il comporte des briques de bordure (10) dans tous les deuxième rangs de briques, ces briques de bordure correspondant à une paroi latérale d'une brique creuse (6).

3. Empilage selon les revendications 1 ou 2, caractérisé en ce que les arêtes longitudinales intérieures des briques creuses (6) sont arrondies ou biseautées.

4. Empilage selon l'une quelconque des revendications 1 à 3, caractérisé en ce que les faces intérieures des briques creuses (6) sont en forme de pyramides tronquées, de sorte que les briques creuses (6) présentent des épaisseurs de parois différentes sur leurs deux faces frontales.

5. Empilage selon la revendication 4 caractérisé en ce que la différence d'épaisseur de parois des briques creuses (6) sur leurs deux faces frontales est de 5 à 15 mm pour une longueur de brique d'environ 150 mm.

6. Empilage selon l'une quelconque des revendications 1 à 5, caractérisé en ce que les parois des briques creuses (6) présentent des cavités ou des perçages.

7. Empilage selon l'une des revendications 1 à 6, caractérisé en ce que les couches de briques creuses (6) disposées les unes derrière les autres dans le sens de l'écoulement des gaz sont décalées les unes par rapport aux autres de sorte que pour chaque canal (7) du premier type d'une couche est suivi par un canal (9) du deuxième type dans la couche suivante.